# EUROPÄISCHE PATENTSCHRIFT

(11) **EP 3 466 642 B1**
(45) Veröffentlichungstag und Bekanntmachung des Hinweises auf die Patenterteilung: **06.12.2023**
(21) Anmeldenummer: 17195223.7
(22) Anmeldetag: 06.10.2017
(51) Int. Cl.: B29C 53/64, B29C 53/82

(54) **VERFAHREN ZUM AUFWICKELN EINES MATERIALSTREIFENS**
METHOD FOR COILING A STRIP OF MATERIAL
PROCÉDÉ DESTINÉS À L'EMBOBINAGE D'UNE BANDE DE MATÉRIAU

(43) Veröffentlichungstag der Anmeldung: 10.04.2019
(73) Patentinhaber: Nitto Advanced Film Gronau GmbH, 48599 Gronau (DE)
(72) Erfinder: Weitkamp, Jürgen, 48683 Ahaus (DE); Schönbeck, Marcus, 33775 Versmold (DE); Rosery, Andreas, 48619 Heek (DE)
(74) Vertreter: Kaimann, Benjamin

(56) Entgegenhaltungen:
- EP-A1- 0 428 808
- EP-A1- 2 295 703
- JP-A- 2001 002 379
- JP-A- 2013 075 750
- US-A- 5 766 348

## Beschreibung

Die Erfindung betrifft ein Verfahren zum Aufwickeln eines Materialstreifens, insbesondere einer Kunststofffolie oder eines mehrschichtigen Kunststofflaminats. Hierzu ist ein Wickeldorn vorgesehen, welche um eine in einer Längsrichtung verlaufende Drehachse drehbar angetrieben ist.

Unter einem Materialstreifen ist allgemein ein Objekt zu verstehen, welches sehr unterschiedliche Abmessungen in einer Dicken- in einer Breiten- sowie in einer Längsrichtung aufweist. Zwischen den Abmessungen liegen üblicherweise ein oder mehrere Größenordnungen, wobei die Dicke die geringste Ausdehnung und die Länge die größte Ausdehnung aufweist.

Bei Kunststofffolien und Kunststofflaminaten, auf die sich die Erfindung im Besonderen bezieht, reicht die Dicke üblicherweise zwischen etwa 10 µm bei einlagigen Kunststofffolien bis zu einigen Millimetern (etwa 2 mm) bei besonders aufwendigen Laminaten mit Rüschen- bzw. Faltenbildung. Die Breite eines entsprechenden Materialstreifens liegt üblicherweise zumindest bei dem 10-Fachen vorzugsweise zumindest beim 1000-Fachen der Dicke.

Die Breite solcher Materialbahnen beträgt dabei - je nach Anwendungszweck und Produktionsschritt - zwischen einigen wenigen Zentimetern und ca. 2 m. Die Länge des Materialstreifens wiederum liegt zumindest beim 10-Fachen von dessen Breite, vorzugsweise zumindest beim 100-Fachen.

Materialstreifen können ohne weiteres Längen von mehreren 100 m bis einige 1000 m erreichen und batchweise bzw. bei kontinuierlicher Produktion des Materialstreifens auch "endlos" zugeführt werden. Mit herkömmlichen Vorrichtungen und Verfahren können lediglich Spulen mit Streifenlängen von ca. 1000 bis 1500 Metern stabil aufgespult werden.

Das erfindungsgemäße Verfahren eignet sich besonders gut für Materialstreifen aus einem Kunststoffmaterial. Hierbei kann es sich beispielsweise um eine ein- oder mehrschichtige Kunststofffolie handeln. Diese weisen üblicherweise eine Dicke zwischen 10 µm (bei einer Monofolie) bis zu mehreren 100 µm bei mehrschichtigen (Coextrusions-)Folien auf. Besonders gut sind das erfindungsgemäße Verfahren und die erfindungsgemäße Vorrichtung bei Streifenbreiten zwischen ca. 1 cm und 20 cm einsetzbar.

Auch für das Aufspulen von mehrschichtigen Kunststofflaminaten eignet sich das erfindungsgemäße Verfahren überaus gut. Hierbei kann es sich insbesondere um elastische Mehrschichtlaminate handeln, welche eine elastische Folienschicht und zumindest eine darauf aufkaschierte Nonwoven-Schicht aufweisen.

Beim Aufwickeln werden um den Wickeldorn herum mehrere Lagen des Streifenmaterials übereinander angeordnet. Hierbei ist der Nachteil bekannt, dass sich Unregelmäßigkeiten in der Dicke des Materialstreifens insbesondere bei einer großen Anzahl von Lagen akkumulieren können, so dass die aufgewickelte Materialrolle einen sehr ungleichmäßigen Verlauf aufweist. Dies führt zu einer ungleichmäßigen Belastung des Streifenmaterials innerhalb der Rolle, so dass die Materialeigenschaften leiden können. Ebenso erfolgt auch eine ungleichmäßige Belastung des Wickeldorns bzw. des Wickelkörpers, auf dem das Material aufgewickelt wird.

Hierzu ist es aus dem Stand der Technik bekannt, beim Aufwickeln eine geringe axiale Bewegung zwischen der zugeführten Materialbahn und den bereits bestehenden Wicklungen vorzusehen. Dadurch gleichen sich systematische Dickenunterschiede - etwa durch eine Profilierung in Breitenrichtung - im gewissen Maße aus, so dass sich eine gleichmäßigere Belastung von Material und Wickelwalze ergibt.

Beispielsweise ist aus DE 1 186 722 eine Vorrichtung und ein Verfahren zum Aufwickeln von Schlauchbahnen aus Kunststofffolien bekannt. Für dieses sogenannte oszillierende Aufwickelverfahren werden zwei Varianten genannt, wonach entweder der Wickeldorn entsprechende Bewegungen ausführt oder die Materialbahn mittels eines Bahnkantensteuergeräts senkrecht zur Bahntransportrichtung hin- und herbewegt wird.

Bei der Papierherstellung ist beispielsweise aus DE 44 14 003 A1 eine Konstruktion bekannt, bei der eine Materialbahn auf einer hohlen Rolle aufgewickelt wird. Die Rolle ist zwischen zwei Spannköpfen eingespannt, welche mit einem Antrieb für eine axiale Bewegung ausgestattet sind. In DE 11 2010 004 858 T5 wird vorgeschlagen, einen kompletten Stützrahmen mit dem Wickeldorn und deren Antrieb in Axialrichtung verfahrbar auszubilden.

Aus JP 2013-075750 A ist ein Verfahren zum Aufwickeln eines Drahtes bekannt. Hierbei wird eine Axialverschiebungen parallel zur Drehbewegung ausgeführt.

Sämtliche, aus dem Stand der Technik bekannte Ausbildungsformen haben dabei den Nachteil, dass für die Bereitstellung einer axialen Verschieblichkeit erhebliche Änderungen gegenüber herkömmlichen, nicht axial beweglichen Konstruktionen notwendig sind. Eine Nachrüstung bestehender Anlagen ist somit nicht oder nur mit unverhältnismäßig hohem Aufwand möglich.

Weiterhin ist es sehr aufwendig, ganze Maschinenteile einschließlich von Stützrahmen und Antrieben linear beweglich aufzustellen. Auch in den Ausführungen, bei denen nur der Wickeldorn allein axial verschoben wird, ergibt sich ein beachtlicher Mehraufwand, da auch die Verbindung mit dem Antrieb und die radialen Wälzlager axial verschieblich ausgebildet sein müssen.

Auch sind die bekannten Vorrichtungen im Verfahren nur unzureichend für schmale Kunststoffstreifen, insbesondere mit einer Breite von weniger als 30 cm geeignet. Entsprechende Materialbreiten werden z. B. bei Zwischenfabrikaten etwa zur Herstellung von sogenannten Windelohren erreicht. Auch mit einer axial oszillierenden Aufwicklung können nur wenige Lagen aufgespult werden, da die derart erzeugte Spule aufgrund eines ungünstigen Verhältnisses zwischen der radialen zur axialen Erstreckung sehr instabil auf der Rolle sitzt.

Vor diesem Hintergrund liegt der Erfindung die Aufgabe zugrunde, die Konstruktion einer zum Aufwickeln von Materialstreifen, insbesondere Kunststofflaminaten, mit der Möglichkeit zur axialen Verschiebung zu vereinfachen. Weiterhin ist es Gegenstand der Erfindung, ein verbessertes Wickelverfahren für Materialbahnen, insbesondere Kunststofflaminate anzugeben, welches die Vorteile der erfindungsgemäßen Wickelvorrichtung nutzt.

Gegenstand der Erfindung und Lösung dieser Aufgaben ist ein Verfahren nach Anspruch 1. Bevorzugte Ausgestaltungen sind in den abhängigen Unteransprüchen angegeben.

Die Erfindung geht von einer Vorrichtung zum Aufwickeln eines Materialstreifens aus, welche weist einen um eine in eine Axialrichtung verlaufende Drehachse drehbar angetriebenen Wickeldorn aufweist. Auf dem Wickeldorn ist eine Wickelwelle angeordnet, welche mit dem Wickeldorn drehfest gekoppelt und in der Axialrichtung verschiebbar ist. Ein Ende des Materialstreifens wird mit der Wickelwelle direkt oder indirekt verbunden, so dass bei einer Drehbewegung der Wickeldorn, welcher auf die Wickelwelle übertragen wird, mehrere Lagen des Materialstreifens zu einer Spule aufgerollt werden. Gleichzeitig folgt die Spule bei einer axialen Verschiebung der Wickelwelle, so dass nachfolgendes Material des Streifens mit Versatz abgelegt wird.

Durch diese Ausgestaltung werden der Drehantrieb und die axiale Verschiebbarkeit mechanisch entkoppelt. Für den Drehantrieb kann dabei ein konventioneller Wickeldorn einer Maschine genutzt werden, bei dem eine axiale Verschiebbarkeit bisher nicht vorgesehen war. Somit wird eine besonders einfache Nachrüstung ermöglicht.

Der Wickeldorn ist vorzugsweise durchgängig ausgebildet. Er überspannt den gesamten Bereich, in dem der Materialstreifen zugeführt wird und ist, vorzugsweise endseitig, mit zwei Lageranordnungen drehbar an der Wickelvorrichtung gehalten. Zweckmäßigerweise ist der Wickeldorn als durchgehende Vollwelle ausgebildet.

Die axial verschieblich auf dem Wickeldorn angeordnete Wickelwelle bildet zumindest abschnittsweise eine hülsenförmige Hohlwelle. Die Wickelwelle ist in Axialrichtung so bemessen, dass sie eine axiale Verschiebung um zumindest das 1,5-Fache, vorzugsweise um zumindest das 2-Fache, insbesondere um das 10-Fache der Breite des Materialstreifens zulässt. Bevorzugt beträgt die axiale Ausdehnung der Wickelwelle höchstens 75% der axialen Distanz zwischen den Lageranordnungen zur drehbaren Lagerung mit dem Wickeldorn an der Wickelvorrichtung.

In einer bevorzugten Ausgestaltung ist die drehfeste Kopplung zwischen dem Wickeldorn und der Wickelwelle über zumindest eine in Axialrichtung verlaufende Nut-Feder-Verbindung realisiert. Diese lässt eine Verschiebung in der Axialrichtung zu. Zweckmäßigerweise ist die Nut-Feder-Verbindung durch eine in der zylindrischen Außenfläche des Wickeldorns verlaufende, in Axialrichtung ausgerichtete Nut und einen hierein eingreifenden Vorsprung der Wickelwelle verwirklicht. Selbstverständlich ist auch eine mechanische Umkehr oder die Verwendung einer Passfeder möglich.

Die Wickelwelle ist formschlüssig an der Außenseite des Wickeldorns gehalten und hierdurch mit dieser drehfest verbunden. Durch den Verlauf der Nut in der Axialrichtung verbleibt die Wickelwelle jedoch in dieser Richtung verschieblich.

Bevorzugt können auch mehrere Nut-Feder-Verbindungen zwischen der Wickelwelle und dem Wickeldorn angeordnet sein. Diese sind dabei zweckmäßigerweise äquidistant an der äußeren Umfangsfläche des Wickeldorns angeordnet.

In einer bevorzugten Ausgestaltung ist die Wickelwelle auf dem Wickeldorn durch einen elektrischen oder hydraulischen Antrieb verschiebbarausgebildet. Dabei kann bei einem hydraulischen Antrieb dieser auch mitdrehend zwischen dem Wickeldorn und der Wickelwelle angeordnet sein.

In einer weiteren bevorzugten Ausgestaltung weist die Wickelwelle eine Umfangsnut auf, in welche ein Mitnehmer zur Verschiebung der Längseinrichtung eingreift. Die Umfangsnut ist an einem zylindrischen Außenabschnitt der Wickelwelle angeordnet und verläuft in einer Ebene senkrecht zur Drehachse. Zweckmäßigerweise ist die Umfangsnut in einem Endbereich der Wickelwelle in Axialrichtung angeordnet. Somit wird das Risiko eines gegenseitigen Kontakts zwischen dem in die Nut eingreifenden Mitnehmer und der Materialbahn minimiert.

Der Endbereich mit der Nut kann insbesondere als separater Fortsatz ausgebildet sein, welcher mit dem Hauptteil der Wickelwelle axial starr aber drehbeweglich verbunden ist. Der Hauptteil der Wickelwelle weist einen äußeren Abschnitt auf, auf dem der Materialstreifen bzw. ein separater Wickelkörper gehalten ist. Zwischen dem Fortsatz und dem Wickeldorn kann vorzugsweise ein Lager ausgebildet sein. Dieses Lager kann als einfaches Gleitlager oder auch als Wälzlager ausgebildet sein. Das Wälzlager muss dabei so ausgelegt sein, dass es eine axiale Verschiebung relativ zum Wickeldorn toleriert. Die Verbindung zwischen dem Fortsatz und dem Hauptteil der Wickelwelle wird zweckmäßigerweise über ein Wälzlager, beispielsweise ein Rillenkugellager realisiert.

Der Mitnehmer ist über einen externen, vorzugsweise elektrischen oder hydraulischen Antrieb in der Axialrichtung beweglich.

In einer bevorzugten Ausgestaltung ist die Wickelwelle über ein Wellenende abnehmbar. Hierdurch kann die Wickelwelle inklusive der auf ihr aufgerollten Wicklungen nach der Beendigung des Aufwickelprozesses entnommen werden.

Alternativ oder zusätzlich kann die Wickelwelle Befestigungseinrichtungen für einen oder mehrere Wickelkörper, insbesondere in Form einer Papprolle, aufweisen. Der Wickelkörper wird hierdurch konzentrisch um die Drehachse an der Wickelwelle gehalten. Zweckmäßigerweise ist der Wickelkörper innenseitig radial mit der Wickelwelle oder außenseitig axial verspannt. Dies hat den Vorteil, dass die Wicklung nicht direkt auf die Wickelwelle, sondern auf den Wickelkörper erfolgt, welcher nach dem Abschließen des Aufwickelprozesses im Ganzen inklusive aufgespulter Materialbahnen entnommen werden kann.

Nach dem beanspruchten Verfahren wird ein Materialstreifen, vorzugsweise endlos, zugeführt dessen Ende mit der Wickelwelle gekoppelt ist. Der Endbereich des Materialstreifens ist also direkt oder indirekt mit einer Außenfläche der Wickelwelle verbunden, so dass eine Drehbewegung und eine axiale Verschiebung der Wickelwelle auf den Endbereich des Materialstreifens bzw. hierauf bereits aufgespulte Lagen des Materialstreifens übertragen werden. Der Wickeldorn und die Wickelwelle werden erfindungsgemäß durch einen Antrieb in eine Drehbewegung versetzt, um den Materialstreifen auf die Wickelwelle direkt oder indirekt aufzuwickeln. Während des Drehbetriebs wird die Wickelwelle gegenüber der Wickeldorn in der Axialrichtung verschoben.

Die axiale Verschiebung ermöglicht eine gleichmäßigere Verteilung des Materialstreifens. Dabei wird im Rahmen der Erfindung die axiale Verschiebbarkeit besonders vorteilhaft über eine axial verschiebbare Wickelwelle realisiert.

Erfindungsgemäß erfolgt die Verschiebung in der Axialrichtung intermittierend. Während des Wickelprozesses gibt es also Phasen mit und Phasen ohne eine axiale Bewegung der Wickelwelle gegenüber dem Wickeldorn. Besonders bevorzugt erfolgt die axiale Bewegung taktweise in Abhängigkeit von der Anzahl der getätigten Umdrehungen der Wickelwalze.

Gemäß der Erfindung wird zunächst eine erste Anzahl von Lagen des Materialstreifens an einer ersten Position bezogen auf die Axialrichtung aufgewickelt. Anschließend erfolgt eine Verschiebung um eine erste Distanz. Anschließend erfolgt das Aufwickeln an einer zweiten Position bezogen auf die Axialrichtung.

Die erste Distanz entspricht zumindest der Streifenbreite. Bevorzugt beträgt sie das 1,5-Fache, insbesondere zumindest das Doppelte der Streifenbreite. Somit ist die Amplitude der axialen Bewegung größer als die Breite des Materialstreifens. Die an der zweiten Position aufgewickelten Lagen sind dabei unabhängig von denen, welche an der ersten Position aufgewickelt werden. Hierzwischen liegt lediglich ein die beiden Lagen verbindender Materialstreifen, welcher infolge der Überlagerung der Drehbewegung mit der Axialbewegung schraubenförmig angeordnet ist. Die axiale Verfahrgeschwindigkeit ist dabei insbesondere so gewählt, dass sich der Materialstreifen im verbindenden Abschnitt nicht mit sich selbst überlappt.

Sofern ein Wickelkörper verwendet wird, ist die erste Position bevorzugt an einem ersten Rand des Wickelkörpers in axialer Richtung und die zweite Position an einem zweiten Rand des Wickelkörpers in axialer Richtung verortet. Dabei beträgt der Abstand des Materialstreifens zu jeweils einem Rand des Wickelkörpers weniger als die Breite des Materialstreifens.

Während einer einzigen Umdrehung muss somit der axiale Verfahrweg zumindest das Einfache der Streifenbreite betragen.

In einer ganz besonders bevorzugten Ausgestaltung wird nach dem Erreichen der zweiten Position eine zweite Anzahl von Lagen des Materialstreifens an der zweiten Position bezogen auf die Axialrichtung aufgewickelt. Anschließend erfolgt eine weitere Verschiebung um eine zweite Distanz, so dass der Materialstreifen anschließend an einer dritten Position in Bezug auf die Axialrichtung aufgewickelt wird. Die zweite Distanz beträgt ebenfalls zumindest das 1-Fache, bevorzugt das 1,5-Fache, insbesondere zumindest das 2-Fache der Streifenbreite.

In einer besonders bevorzugten Ausgestaltung der Erfindung hat die zweite Distanz denselben Betrag jedoch die entgegengesetzte Richtung der ersten Distanz. Infolge dessen ist die dritte Position mit der ersten Position identisch. Das Aufwickeln des Materialstreifens erfolgt somit effektiv (mit Ausnahme der verbindenden Bereiche) ausschließlich an der ersten und an der zweiten Position. Somit werden die Lagen des Materialstreifens gleichmäßig auf die erste Position und die zweite Position verteilt, was insbesondere für die Stabilität der Spule auf der Wickelwalze von Vorteil ist. Gerade bei Wicklungen, welche eine radiale Ausdehnung erhalten sollen, welche gegenüber der Streifenbreite groß ist, kann eine Verteilung der Wicklung auf mehrere Positionen bezogen auf die Axialrichtung vorteilhaft sein.

Ganz besonders bevorzugt werden die erste Position und die zweite Position jeweils mehrfach nacheinander angefahren. Die hierbei jeweils auftretenden verbindenden Abschnitte können trotz ihres geringen Materialaufwandes überraschenderweise einen signifikanten Beitrag zur Stabilität der beiden miteinander verbundenen Spulen im Vergleich zu zwei separaten Spulen erzielen.

In einer weiteren Ausgestaltung der Erfindung kann das Streifenmaterial auch auf mehr als zwei Positionen verteilt werden. Dabei wird die Wicklung so gesteuert, dass an sämtlichen Positionen stets ähnlich viele Lagen aufgewickelt werden.

Die Erfindung wird nachfolgend anhand von lediglich ein Ausführungsbeispiel darstellenden Figuren erläutert. Es zeigen schematisch
- Fig. 1: die Frontansicht einer Wickelvorrichtung zur Durchführung des erfindungsgemäßen Verfahrens zu Beginn eines Wickelvorgangs,
- Fig. 2A: einen Horizontalschnitt durch den Wickeldorn aus Fig. 1 entlang einer Linie A-A,
- Fig. 2B: einen Längsschnitt durch den Wickeldorn aus Fig. 1 entlang einer Linie B-B,
- Fig. 3A: eine Detailansicht aus Fig. 1,
- Fig. 3B: eine Fig. 3A entsprechende Ansicht in einer weiteren Phase des Aufwickelprozesses,
- Fig. 3C: eine den Ansichten aus 3A und 3B entsprechende Ansicht zu einem späteren Zeitpunkt während des Aufwickelprozesses,
- Fig. 4A: eine Ansicht entsprechend Fig. 1 zu einem noch späteren Zeitpunkt des Aufwickelprozesses und
- Fig. 4B: eine Ansicht entsprechend Fig. 1 und 4A zu einem noch späteren Zeitpunkt.

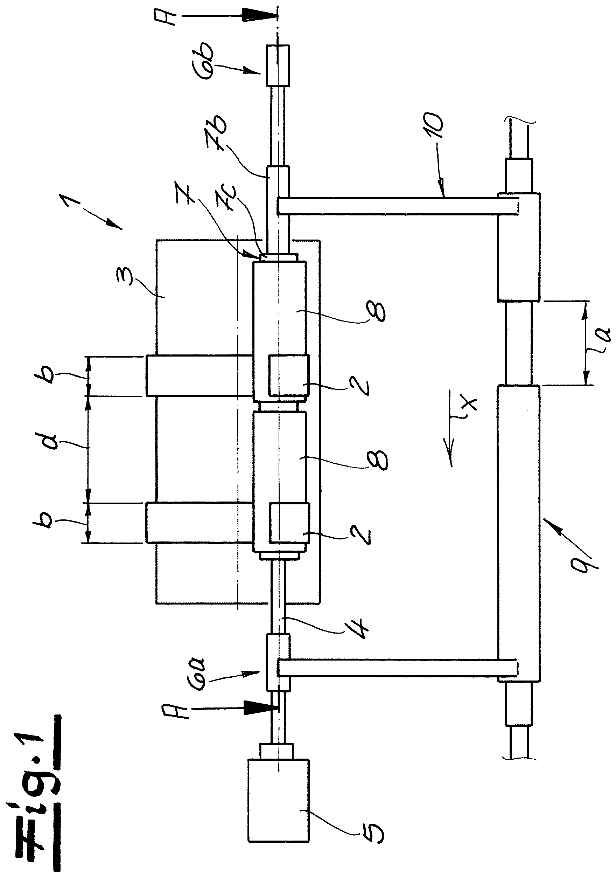

Die Fig. 1 zeigt eine Vorrichtung 1 zur Durchführung des erfindungsgemäßen Verfahrens. Diese ist zum Aufwickeln zumindest eines Materialstreifens 2 vorgesehen. Im Ausführungsbeispiel werden zwei Materialstreifen 2 parallel über eine Kontaktwalze 3 zugeführt. Die beiden Materialstreifen 2 weisen eine identische Breite b auf und werden mit einem Abstand d von zumindest der doppelten Breite b vorzugsweise zumindest der 2,2-fachen Breite zugeführt. Hierdurch wird ein Überlapp der unterschiedlichen Materialstreifen während des Aufwickelns vermieden.

Die Vorrichtung 1 weist einen Wickeldorn 4 auf, welche um eine in einer Axialrichtung x verlaufende Drehachse drehbar angetrieben ist. Der Antrieb 5 zur Erzeugung der Drehbewegung des Wickeldorns 4 ist lediglich schematisch angedeutet. Der Wickeldorn und der Antrieb sind längs der Axialrichtung x ortsfest angeordnet. Der Wickeldorn ist durchgängig ausgebildet und überspannt in der Axialrichtung x zumindest einen Bereich zwischen einer ersten Lagerstelle 6a und einer zweiten Lagerstelle 6b. Im Ausführungsbeispiel sind die Lagerstellen 6a und 6b beidseits der Zuführungswalze 3 angeordnet.

Erfindungsgemäß ist auf den Wickeldorn 4 eine Wickelwelle 7 angeordnet, welche mit dem Wickeldorn drehfest gekoppelt und in der Axialrichtung x verschiebbar ist. Auf der Wickelwelle 7 sind zwei Wickelkörper 8 jeweils zur Aufnahme der Wicklungen eines Materialstreifens 2 angeordnet. Die Wickelkörper 8 werden durch Papprollen gebildet, welche innenseitig mit der Wickelwelle 7 radial verspannt sind. Die Fig. 1 stellt die Phase zu Beginn des Wickelprozesses dar, in dem noch keine vollständigen Wickellagen auf die Wickelkörper 8 aufgebracht sind. Lediglich das Ende der Materialstreifen 2 ist bereits an den Wickelkörpern 8 befestigt.

Zur Steuerung der axialen Verschiebung ist ein elektrischer Antrieb 9 vorgesehen, welcher mittels eines Mitnehmers 10 auf eine Nut 7a an einem Fortsatz 7b der Wickelwelle 7 wirkt. Der Mitnehmer 10 ist gleichzeitig auch als Stütze ausgebildet, welcher den Wickeldorn 4 neben den beiden Lagerelementen 6a und 6b trägt.

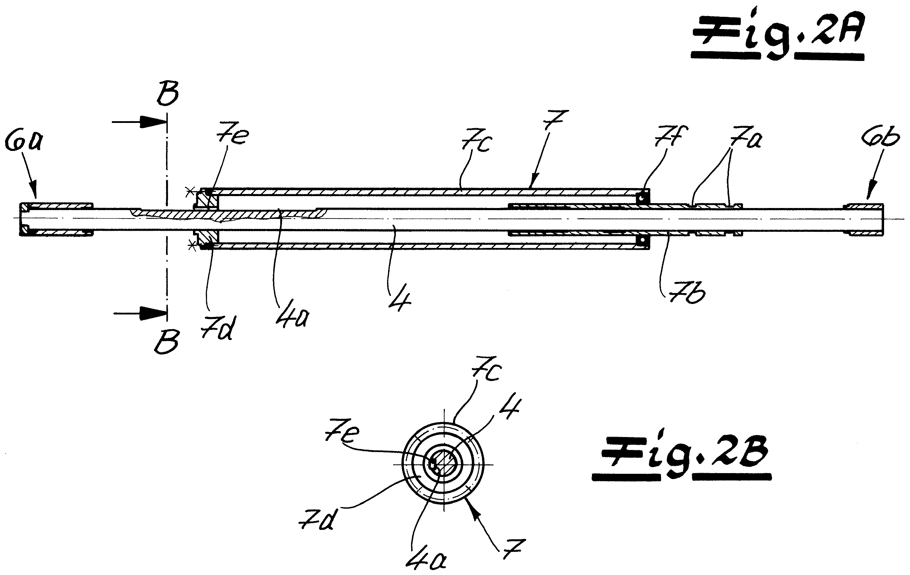

In den Fig. 2A und 2B ist das Zusammenspiel zwischen dem Wickeldorn 4 und der Wickelwelle 7 dargestellt. Der Wickeldorn 4 ist als Vollwelle ausgebildet, welche an ihren Enden Verdickungen für die Lageranordnungen 6a, 6b aufweist. In etwa mittig auf dem Wickeldorn 4 ist die mehrteilig aufgebaute Wickelwelle 7 angeordnet. Die Wickelwelle 7 umfasst einen äußeren Abschnitt 7c, an welchem mit nicht dargestellten Befestigungsmitteln die Wickelkörper 8 befestigbar sind. In der Darstellung gemäß Fig. 2A ist am linken Ende des äußeren Abschnitts 7c ein flanschartiges Ende 7d erkennbar. An dem flanschartigen Ende 7d ist ein Vorsprung 7e angeordnet, welcher in eine zugeordnete Nut 4a des Wickeldorns 4 eingreift. Im gezeigten Ausführungsbeispiel ist eine einzige Nut-Feder-Verbindung bestehend aus der Nut 4a und dem Vorsprung 7e vorgesehen.

Das in Fig. 2A rechtsseitig dargestellte Ende zeigt die rohrförmig ausgebildete Verlängerung 7b der Wickelwelle 7, welche den Wickeldorn 4 konzentrisch und mit einem geringen Abstand umgibt. An der Verlängerung 7b sind zwei in Umfangsrichtung verlaufende Umfangsnuten 7a zu Wechselwirkung mit dem Mitnehmer 10 vorgesehen. Die Kontaktfläche zwischen dem Fortsatz 7b und dem Wickeldorn 4 ist als einfaches Gleitlager ausgebildet, welches sowohl eine translatorische Bewegung in Axialrichtung als auch eine relative Drehbewegung um die Drehachse zulässt.

Die Verbindung zwischen dem äußeren Abschnitt 7c und dem Vorsprung 7a der Verlängerung 7b ist mittels eines Wälzlagers 7f ausgebildet. Das Wälzlager 7f lässt eine relative Drehbewegung um die Drehachse zu, während die Verlängerung 7b und der äußere Abschnitt 7c in axialer Richtung miteinander fest gekoppelt sind. Dies ermöglicht eine geringere oder verschwindende relative Drehbewegung zwischen der Verlängerung 7b und dem Mitnehmer 10 und reduziert somit den Verschleiß.

Nachfolgend wird das erfindungsgemäße Verfahren zum Aufwickeln eines Materialstreifens erläutert. Zu Beginn des Wickelprozesses, welcher in Fig. 1 dargestellt ist, sind die beiden Wickelkörper 8 noch leer und lediglich die Enden der Materialstreifen 2 mit den Wickelkörpern 8 verbunden. Die Wickelwelle 7 befindet sich in einer ersten Position bezogen auf die Axialrichtung x, von der sie so weit nach rechts verschoben ist, dass die Materialstreifen 2 nahe des linken Endes der Wickelkörper 8 an diese herangeführt werden.

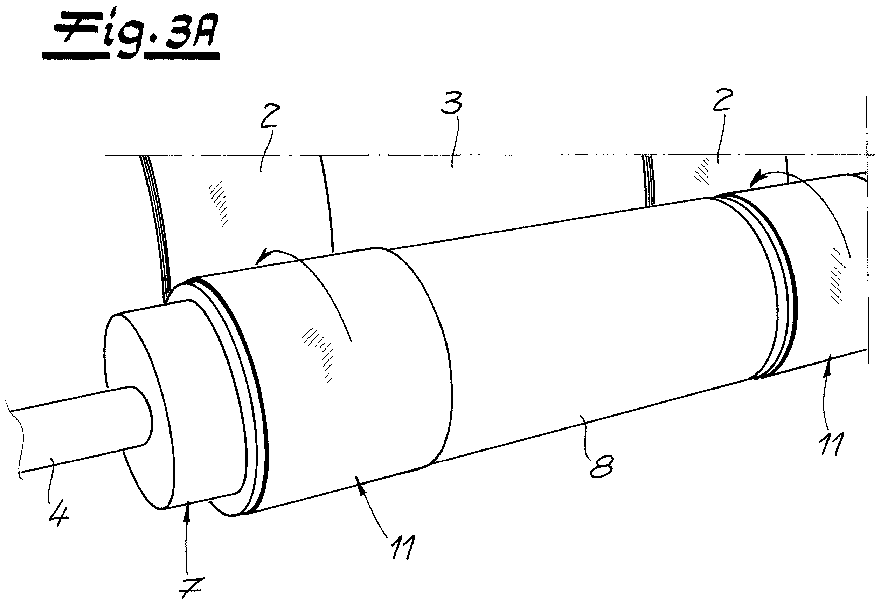

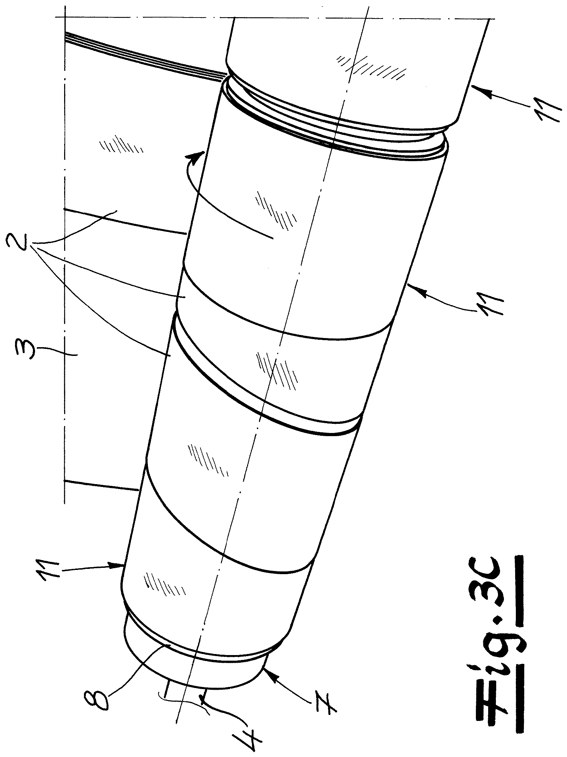

Durch den Antrieb 5 wird der Wickeldorn 4 in eine Drehbewegung versetzt, welche über die Wickelwelle 7 auf die Wickelkörper 8 übertragen wird. Infolge dessen werden die Materialstreifen 2 auf den Wickelkörpern 8 aufgespult. Es bildet sich dabei ohne axiale Bewegung der Wickelwelle 7 zunächst eine Spule 11 bestehend aus mehreren Lagen des Materialstreifens 2 an der ersten Position. Dies ist in Fig. 3A dargestellt. Außerhalb der ersten Position liegt noch kein Teil der Materialstreifen 2 auf den Wickelkörpern 8 auf.

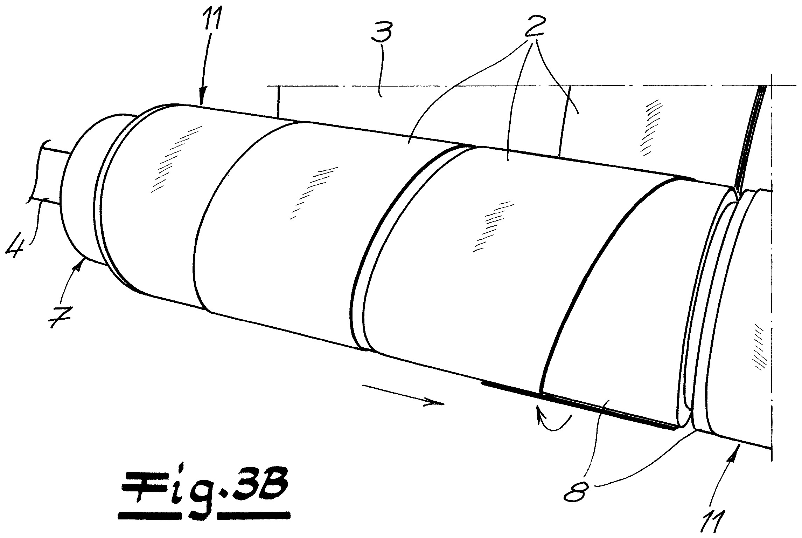

Bei Erreichen einer ersten Anzahl von Wicklungen an der ersten Position wird die Wickelwelle bei laufender Drehbewegung axial verschoben. Wie man Fig. 3B entnimmt, ist die axiale Verfahrgeschwindigkeit dabei so gewählt, dass innerhalb einer Umdrehung der Verfahrweg in Axialrichtung x größer ist als die Breite b des Materialstreifens 2. Infolge dessen wird der Materialstreifen 2 schraubenförmig und ohne Überlapp auf dem Wickelkörper 8 aufgewickelt.

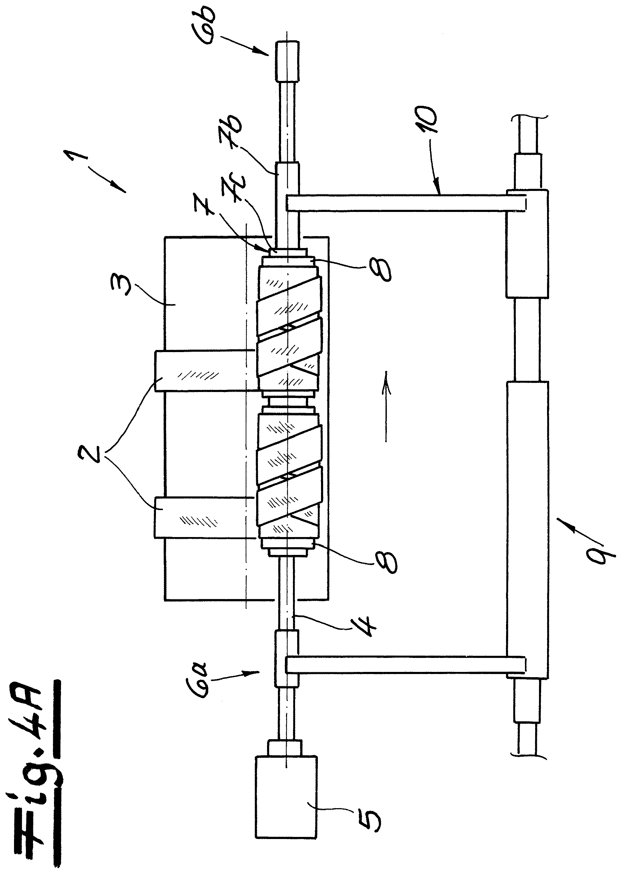

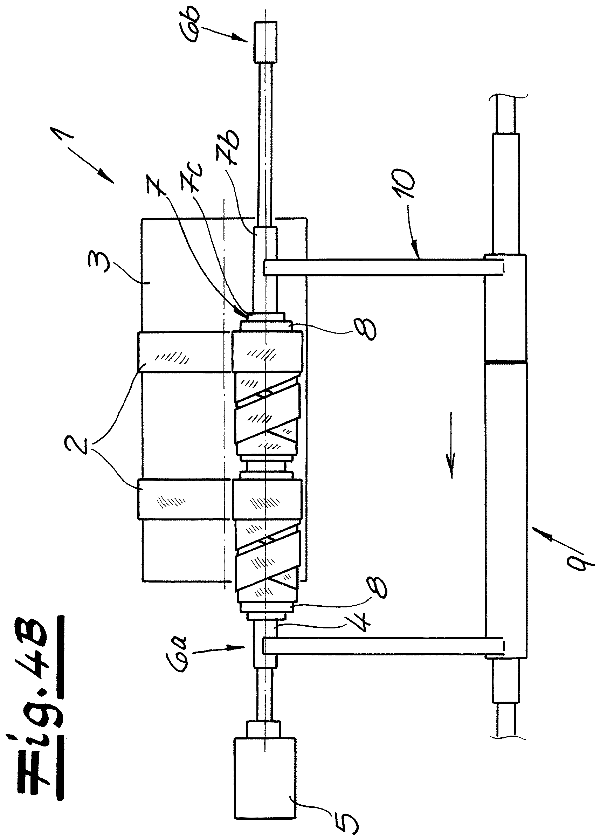

In Fig. 3B erreicht der Materialstreifen in Bezug auf die Axialrichtung x eine zweite Position im Verhältnis zur Wickelwelle 7. In dieser wird der Materialstreifen nunmehr in der zweiten Position nahe des rechten Endes des Wickelkörpers 8 aufgespult. Der axiale Abstand zwischen der ersten Position und der zweiten Position beträgt zumindest das 2-Fache der Streifenbreite b. Nach Erreichen der zweiten Position (Fig. 3B) werden dort nunmehr eine zweite Anzahl von Lagen zu einer zweiten Spule aufgewickelt. Nach Erreichen der zweiten Anzahl von Lagen verfährt die Wickelwelle in umgekehrter Richtung jedoch um denselben Betrag a, so dass die Materialstreifen 2 nunmehr wieder an der ersten Position aufgewickelt werden. Dies ist in der Fig. 4A in der Gesamtheit der Vorrichtung 1 dargestellt. Die beiden Materialstreifen werden jeweils gleichlaufend auf separaten Wickelkörpern 8 aufgespult. Der Wechsel zwischen der ersten Position und der zweiten Position können, wie man der Fig. 4B entnimmt, mehrfach hintereinander wiederholt werden. Somit ergibt sich eine wesentlich stabilere Wicklung auf den Wickelkörpern als wenn dasselbe Material statisch an nur einer Position aufgewickelt würde.

## Patentansprüche

1. Verfahren zum Aufwickeln eines Materialstreifens (2) durch eine Vorrichtung (1) mit einer um eine in einer Axialrichtung (x) verlaufende Drehachse drehbar angetriebenem Wickeldorn (4), wobei auf dem Wickeldorn (4) eine Wickelwelle (7) angeordnet ist, welche mit dem Wickeldorn (4) drehfest gekoppelt und in der Axialrichtung (x) verschiebbar ist, wobei der Materialstreifen (2) zugeführt wird, wobei dessen Ende mit der Wickelwelle (7) gekoppelt ist, wobei der Wickeldorn(4) und mit ihr die Wickelwelle (7) durch einen Antrieb (5) in eine Drehbewegung versetzt werden, um den Materialstreifen (2) auf die Wickelwelle (7) aufzuwickeln, und wobei die Wickelwelle während des Drehbetriebs in der Längsrichtung verschoben wird, **dadurch gekennzeichnet, dass** die Verschiebung intermittierend erfolgt und dass zunächst eine Anzahl von Lagen des Materialstreifens (2) an einer ersten Position bezogen auf die Axialrichtung (x) aufgewickelt wird und dass anschließend eine Verschiebung um eine erste Distanz, die bevorzugt zumindest den Betrag der Streifenbreite (b) beträgt, erfolgt und dass anschließend in einer zweiten Position bezogen auf die Axialrichtung (x) mehrere Lagen des Materialstreifens aufgewickelt werden.

2. Verfahren nach Anspruch 1, **dadurch gekennzeichnet, dass** danach eine zweite Anzahl von Lagen des Materialstreifens (12) an der zweiten Position bezogen auf die Axialrichtung (x) aufgewickelt wird und dass anschließend eine Verschiebung um eine zweite Distanz, deren Betrag bevorzugt zumindest der Streifenbreite (b) entspricht, erfolgt und dass anschließend in einer dritten Position bezogen auf die Axialrichtung (x) mehrere Lagen des Materialstreifens (2) aufgewickelt werden.

3. Verfahren nach Anspruch 2, **dadurch gekennzeichnet, dass** die zweite Distanz denselben Betrag jedoch die entgegengesetzte Richtung der ersten Distanz hat, so dass die dritte Position mit der ersten Position identisch ist.

4. Verfahren nach Anspruch 2 oder 3, **dadurch gekennzeichnet, dass** die erste Position und die zweite Position jeweils mehrfach nacheinander angefahren werden.

5. Verfahren nach einem der Ansprüche 1 bis 4, **dadurch gekennzeichnet, dass** die Drehgeschwindigkeit des Wickeldorns(4) so variiert wird, dass die Radialgeschwindigkeit des aufgewickelten Materialstreifens (2) konstant ist.

6. Verfahren nach einem der Ansprüche 1 bis 5, **dadurch gekennzeichnet, dass** eine Vielzahl von Materialstreifen (2) parallel aufgewickelt wird, wobei die Verschiebung in Axialrichtung (x) so gesteuert wird, dass sich die Wicklungen unterschiedlicher Materialstreifen nicht berühren.

7. Verfahren nach Anspruch 6, **dadurch gekennzeichnet, dass** die verschiedenen Materialstreifen (2) Teilstreifen einer gemeinsamen Materialbahn sind, welche durch Trennung in Längsrichtung hergestellt werden.

## Claims

1. Method for winding a material strip (2) by a device (1) comprising a winding mandrel (4) which is rotatably driven about an axis of rotation running in an axial direction (x), wherein a winding shaft (7) is arranged on the winding mandrel (4), which is coupled to the winding mandrel (4) in a rotationally fixed manner and can be displaced in the axial direction (x), wherein the material strip (2) is supplied, wherein the end thereof is coupled to the winding shaft (7), wherein the winding mandrel (4) and with it the winding shaft (7) are set in rotation by a drive (5), in order to wind the material strip (2) onto the winding shaft (7) and wherein the winding shaft is displaced in the longitudinal direction during rotation, **characterized in that** the displacement takes place intermittently and that firstly a number of layers of the material strip (2) is wound at a first position relative to the axial direction (x) and then a displacement takes place by a first distance which is preferably at least the amount of the strip width (b) and that then a plurality of layers of the material strip are wound in a second position relative to the axial direction (x).

2. The method according to claim 1, **characterized in that** a second number of layers of the material strip (12) is then wound at the second position relative to the axial direction (x) and that then a displacement takes place by a second distance, the magnitude of which is preferably at least correspondung to the strip width (b) and that then a plurality of layers of the material strip (2) are wound in a third position relative to the axial direction (x).

3. Method according to claim 2, **characterized in that** the second distance has the same magnitude but the opposite direction to the first distance, so that the third position is identical to the first position.

4. Method according to claim 2 or 3, **characterized in that** the first position and the second position are each approached several times one after the other.

5. Method according to one of claims 1 to 4, **characterized in that** the rotational speed of the winding mandrel (4) is varied so that the radial speed of the wound material strip (2) is constant.

6. Method according to one of claims 1 to 5, **characterized in that** a plurality of material strips (2) are wound in parallel, wherein the displacement in the axial direction (x) is controlled so that the windings of different material strips do not touch each other.

7. Method according to claim 6, **characterized in that** the different material strips (2) are partial strips of a common material web, which are produced by separation in the longitudinal direction.

## Revendications

1. Procédé pour enrouler une bande de matériau (2) à travers un dispositif (1) comprenant un mandrin d'enroulement (4) entraîné en rotation sur un axe de rotation passant dans un sens axial (x), dans lequel un arbre d'enroulement (7) est disposé sur le mandrin d'enroulement (4), lequel est couplé fixe en rotation avec le mandrin d'enroulement (4) et est mobile dans le sens axial (x), dans lequel la bande de matériau (2) est alimentée, dans lequel son extrémité est couplée à l'arbre d'enroulement (7), dans lequel le mandrin d'enroulement (4) et avec lui l'arbre d'enroulement (7) sont mis dans un mouvement de rotation par un entraînement (5), pour enrouler la bande de matériau (2) sur l'arbre d'enroulement (7), et dans lequel l'arbre d'enroulement est déplacé dans le sens longitudinal pendant la rotation, **caractérisé en ce que** le déplacement s'effectue de façon intermittente et que d'abord un nombre de couches de la bande de matériau (2) est enroulé à une première position par rapport au sens axial (x) et qu'ensuite, un déplacement d'une première distance qui fait de préférence au moins la valeur de la largeur de bande (b) est effectué, et qu'ensuite plusieurs couches de la bande de matériau sont enroulées dans une deuxième position par rapport au sens axial (x).

2. Procédé selon la revendication 1, **caractérisé en ce qu'**après, un second nombre de couches de la bande de matériau (12) est enroulé dans la deuxième position par rapport au sens axial (x) et qu'ensuite, un déplacement d'une seconde distance dont la valeur correspond de préférence au moins à la largeur de bande (b), est effectué et qu'ensuite plusieurs couches de la bande de matériau (2) sont enroulées dans une troisième position par rapport au sens axial (x).

3. Procédé selon la revendication 2, **caractérisé en ce que** la seconde distance a la même valeur mais dans le sens opposé de la première distance, de telle sorte que la troisième position est identique à la première position.

4. Procédé selon la revendication 2 ou 3, **caractérisé en ce que** la première position et la deuxième position sont démarrées plusieurs fois l'une après l'autre.

5. Procédé selon l'une des revendications 1 à 4, **caractérisé en ce que** la vitesse de rotation du mandrin d'enroulement (4) est ainsi variée que la vitesse radiale de la bande de matériau (2) enroulée est constante.

6. Procédé selon l'une des revendications 1 à 5, **caractérisé en ce qu'**une pluralité de bandes de matériau (2) sont enroulées parallèlement, dans lequel le déplacement dans le sens axial (x) est ainsi piloté que les enroulements de différentes bandes de matériau ne se touchent pas.

7. Procédé selon la revendication 6, **caractérisé en ce que** les différentes bandes de matériau (2) sont des bandes partielles d'un lé de matériau commun qui sont fabriquées par séparation dans le sens longitudinal.
